# EUROPEAN PATENT APPLICATION

(11) **EP 4 491 021 A1**
(43) Date of publication of application: **15.01.2025**
(21) Application number: 23382719.5
(22) Date of filing: 13.07.2023
(51) Int. Cl.: A01N 25/00, A01N 25/02, A01N 25/10, A01N 37/14, A01N 37/16, A01N 37/36, A01N 43/08, A01N 43/16, A01P 3/00, A01N 65/00, A01N 65/34

(54) **COMPOSITION FOR THE PROTECTION OF CROPS**

(71) Applicant: Sustainable Agro Solutions, SAU, 25100 Almacelles (ES)
(72) Inventor: ALONSO RODRÍGUEZ, Esther, 25005 Lleida (ES); GONZÁLEZ MARCOS, Luis Maria, 25230 Mollerussa (ES)
(74) Representative: Torner, Juncosa I Associats, SL

(57) **Abstract**

The present invention discloses a composition for the protection of crops against pathogenic comprising karaya gum and pectin, wherein karaya gum is present in an amount ranging between 5 and 15% by weight with respect to the total composition and pectin is present in an amount ranging between 20 and 60% by weight with respect to the total composition. Furthermore, the present invention discloses a method of protecting crops and seedlings against pathogenic organisms comprising the application of said composition. The present invention further discloses the use of said composition for the protection of crops and seedlings against pathogenic organisms and the use of said composition for the treatment of seeds.

## Description

### FIELD OF THE ART

The present invention relates to compositions having the capacity to activate the natural defense mechanisms of plants against pathogenic microorganisms, especially fungal diseases, by means of the application of compositions based on natural carbohydrates.

### BACKGROUND OF THE INVENTION

Society is demanding with increasing emphasis foods which are healthier and more reliable, i.e., free of chemical and microbiological residues which may be harmful to the consumer. To achieve producing this type of foods belonging to the so-called Green or Organic Agriculture, the implementation of clean agricultural practices is currently in the ascendant.

Up to now, most of the treatments in plants against pathogenic microorganisms involve the application of synthetic substances having generally biocidal properties, i.e, they kill or considerably disturb the metabolism of said pestes.

For instance, patent application WO2014/099821 discloses pest control compositions containing solavetivone, 5-epi-P-vetivone or a derivative or analog thereof in combination with other active ingredients. Said ingredients may be viscosity modulating agents, selected from among several compounds, including polysaccharides such as arabinogalactan, pectin, gum tragacanth, karaya gum, rhamsan gum, stach and xanthan gum among others, and/or antioxidants, including ascorbyl palmitate and butylated-cresol among others.

Similarly, patent application WO2014/031790 discloses repellent and pesticidal compositions containing nootkatone and/or a derivative or analog thereof in combination with other active ingredients. Said ingredients may be viscosity modulating agents, selected from among several compounds, including polysaccharides such as arabinogalactan, pectin, gum tragacanth, karaya gum, rhamsan gum, stach and xanthan gum among others, and/or antioxidants, including ascorbyl palmitate and butylated-cresol among others.

However, very few of the synthetic substances developed against pathogenic microorganisms in plants exert this action selectively, thereby generating side effects on other organisms. Moreover, microbial resistance is created at mid- or short-term opening a vicious circle consisting of the need to apply larger amounts of pesticides to achieve moderately acceptable results, thereby increasing the production costs and considerably affecting the environment in terms of flora, fauna, air, soil, water and welfare in human beings.

As a result, the regulatory agencies of the European Union and the United States have imposed severe limits to the use of synthetic compounds for treating pathogenic organisms having biocidal effects, setting an ever- decreasing threshold to the permissible levels of the presence of said synthetic compounds in vegetables and their derivatives.

Therefore, it is essential and urgent to search for new alternatives to effectively control pathogenic microorganisms. One of said alternatives is to activate the natural defenses of plants through the external application of substances which activate or modifiy the plant biochemistry in terms of its primary and secondary metabolites.

For instance, patent application US2020214286A1 discloses a biostimulant composition comprising a combination of ingredients without a pesticide or herbicide, the composition comprising an amino acid, a polysaccharide, a betaine, a polyol, an enzyme, and an agriculturally acceptable carrier.

Similarly, patent application WO 2010/109290 from the same applicant as in the present invention discloses a composition having the capacity to activate the natural defense mechanisms of plants against pathogenic microorganisms. Said compositions are based on a combination of at least two natural carbohydrate derivatives selected from a group including cell wall polysaccharides, such as pectin; polysaccharides such as dextrin and exuded gums from plants such as gum tragacanth, xanthan gum, gum Arabic, gum karaya or mastic gum, preferably compositions of two out of three carbohydrates: Pectin, Gum Karaya and Glucosamine.

There remains in the art a need for new compositions for protecting crops by means of activating defense mechanisms in plants.

### SUMMARY OF THE INVENTION

In order to address one or more of the foregoing problems, one aspect of the present invention provides a composition for the protection of crops against pathogenic organisms comprising karaya gum and pectin, wherein the relative proportion by weight of karaya gum and pectin is between 1:1,3 and 1:12.

In particular, the present disclosure describes a composition wherein karaya gum is present in an amount ranging between 5 and 15% by weight with respect to the total composition and pectin is present in an amount ranging between 20 and 60% by weight with respect to the total composition.

Another aspect of the invention relates to a method of protecting crops and seedlings against pathogenic organisms comprising the application of a composition according to the present invention to said crops and seedlings by foliar spraying, trunk-injection, stem-injection or by means of irrigation system or underground injection to the roots of the crops and seedlings.

A further aspect of the invention relates the use of the composition according to the present invention for the protection of crops and seedlings selected from the group of of coffee, potato, vegetables, fruit trees, banana, citrus, ornamental and flower crops, extensive crops such as wheat, oat, rice, soy and corn and sugar canes against pathogenic organisms selected from the group of Pyricularia oryzae, Phakopsora pachyrhizi, Phytophthora infestans, Phytophtora capsici, Septoria glycines, Cercospora kikuchii, Pseudoperonospora cubensis, Mycosphaerella fijiensis, Mycosphaerella musicola, Esclerotinia and Alternaria.

Yet a further aspect of the invention relates to the use of the composition according to the present invention for the treatment of seeds.

### DESCRIPTION OF THE INVENTION

The object of this invention is to improve and provide with new compositions aimed to modify the biochemistry of plants, activating several defense mechanisms against pathogenic organisms, by adding compounds and additives that have synergistic effects to improve formulation stability and maximize their efficacy. Indeed, these compositions have no direct biocidal effect and offer a mechanism of action which is effective, environmentally friendly and safe for humans. The design of these substances is based on the structure of several oligo- and polysaccharides called elicitors, which have the capacity to induce the production of phytoalexins, substances having a recognized antibiotic activity, and compounds and additives have been developed and fine-tuned to maximize the efficiency of the compositions by acting synergistically with said elicitors.

Because the mechanism of action of these substances is virtually universal for all plants, since they involve the activation of natural defenses, these compositions and the methodology herein disclosed can be applied to all the plants requiring a non-biocidal defense elicitation mechanism against pathogenic microorganisms, or in combination with standard biocidal practices, reducing chemical load.

The compositions herein disclosed have been designed bio-rationally, taking as basis the structure of natural phytoalexin-eliciting substances. These compositions have a protective effect to plants and lack direct biocidal effects. Moreover, these compositions include synergistical compounds and additives to maximize their efficacy and improve formulation stability.

According to the present invention, different compositions for the protection of crops suitable for controlling pathogenic microorganisms are proposed, wherein such compositions comprise a combination of two natural carbohydrate derivatives such as Pectin and Gum Karaya in a specific proportion. Different to all the known prior art, the relative proportions of the two mentioned components unexpectedly yields an optimal protection for crops against pathogenic organisms.

The composition for the protection of crops against pathogenic organisms is as defined in the present disclosure. Unless otherwise indicated, all percentages relating to the content of a component or to a collection of components of the composition of the present invention refer to the weight percentage with respect to the total weight of the composition.

Pectin is a polysaccharide of interest as an elicitor. It is a very complex oligogalacturonide which is located in the cell wall of plants, rich in galacturonic acid, mainly formed by several monomers derived from rhamnose and galactose forming basically three types of polysaccharides: type I branched rhamnogalacturonans, substituted galacturonans and a homogalacturonan domain with different degrees of methylation. Industrially, it is mainly obtained from citrus and apple tree and is used as a gelling agent in the food industry.

Gum karaya is a type of exuded gum, like gum Arabic, gum tragacanth and xanthan gum. Gum Kararya is an acid polysaccharide composed of the sugars galactose, thamnose and galacturonic acid. It can be obtained from the tree *Sterculia urens.* It is used as a thickener and emulsifier in foods, as a laxative and as a denture adhesive. As a food additive it has the E number E416.

The present disclosure also relates to a composition for the protection of crops against pathogenic organisms comprising karaya gum and pectin wherein the relative proportion by weight of karaya gum and pectin is between 1:1,3 and 1:12. In general, the amount of pectin in the composition is higher than the amount of karaya gum. The relative proportion by weight of karaya gum and pectin is preferably between 1:2 and 1:10, more preferably between 1:3 and 1:6, even more preferably about 1:4.

Moreover, the present disclosure also relates to a composition for the protection of crops against pathogenic organisms comprising karaya gum and pectin wherein karaya gum is present in an amount ranging between 5 and 15% by weight with respect to the total composition and pectin is present in an amount ranging between 30 and 50% by weight with respect to the total composition.

Furthermore, the composition according to the present disclosure may comprise an acid preferably selected from the group consisting of citric acid, malic acid, ascorbic acid and tartaric acid. More preferably, the acid is selected from the group consisting of citric acid and ascorbic acid. It is known in the art that ascorbic acid is equivalent to Vitamin C.

The composition according to the present disclosure may further comprise a plant extract selected from the group of plants consisting of Acerola (*Malpighia emarginata*)*,* Kakadu (*Terminalia Ferdinandiana*)*,* Camu-camu (*Myrciaria dubia*)*,* Goji berries (*Lycium barbarum o chinense*)*,* Musk rose (*Rosa eglanteria*), Rose hip extract and Baobab pulp. Preferably, the plant extract is Acerola (*Malpighia emarginata*). The above mentioned plant extracts are known in the art to have a high content or be an important source of vitamin C.

Furthermore, the composition according to the present disclosure may further comprise an additive preferably selected from the group consisting of a lignin derivative, a natural essential oil and macronutrients and micronutrients.

A lignin derivative according to the present disclosure may be selected from the group consisting of sodium lignosulfonate, potassium lignosulfonate, Kraft lignin and combinations thereof.

Kraft lignin is known in the art as a kind of industrial lignin obtained from Kraft pulp, the chemical pulp obtained during the Kraft process, the process for conversion of wood into wood pulp by treating wood with a hot mixture of water, sodium hydroxide and sodium sulfide.

A natural essential oil according to the present disclosure is preferably selected from the group consisting of citronella essential oil, cinnamon oil, clove oil and combinations thereof.

Macronutrients and micronutrients are both terms known in the art. Macronutrients are regarded as essential plant nutrients taken up and consumed by the plants in a large amount, essential for plant growth and a good overall state of the plant. Examples of macronutrients are typically potassium, nitrogen, phosphorus. Conversely, micronutrients are regarded as essential plant nutrients taken up and consumed by the plants in relatively lesser amount, playing an eminent role in plant growth, development and plant metabolism. Examples of micronutrients include boron, copper, chlorine, iron, zinc, manganese and molybdenum.

Thus, macronutrients and micronutrients according to the present disclosure are selected from the group consisting of urea, ammonium nitrate, phosphoric acid, potassium hydroxide, potassium nitrate, potassium sulfate, calcium nitrate, magnesium sulphate, iron sulphate, zinc sulphate, manganese sulphate, copper sulphate, ammonium molybdate, boric acid, silicic acid, sodium selenate and combinations thereof.

Moreover, the composition according to the present disclosure may further comprise a coadjuvant, said coadjuvant comprising a preservative and/or a surfactant.

Preservatives according to the present disclosure are preferably selected from the group consisting of sodium benzoate, potassium sorbate, paraben and its derivates, 1,2- benzisothiazol-3(2H)-one, (benciloxi)methanol, propionic acid, lactic acid, sorbic acid, sulphites and combinations thereof. Surfactants according to the present disclosure are preferably selected from the group consisting of polyoxyethylene sorbitan monolaurate, polyoxyethylene polyoxypropylene sorbitan monolaurate, polyoxyethylene monobranched alcohol, amine ethoxylate, alkoxylated polyol ester and combinations thereof.

The content of the macronutrients and micronutrients in the composition according to the present disclosure is preferably comprised between 3 and 20% by dry weight, i.e, with respect to the total amount of the composition. The amount of macronutrients and micronutrients in the composition in the present disclosure is present in a relative proportion by weight of macronutrients and micronutrients and karaya gum between 5:1 and 1:4, respectively.

The content of the preservative in the composition according to the present disclosure is preferably comprised between 0,01 and 0,5% by dry weight. The amount of preservatives in the composition in the present disclosure is present in a relative proportion by weight of karaya gum and preservatives between 1:1500 and 1:10, respectively. The surfactant according to the present disclosure is preferably in an amount comprised between 1 and 5% by dry weight. The amount of surfactant in the composition in the present disclosure is present in a relative proportion by weight of karaya gum and surfactant between 1:15 and 1:1, respectively.

The skilled person understands that dry weight refers to the total weight of the composition in solid state, excluding water.

Furthermore, the composition disclosed hereinabove may preferably be formulated in a soluble solid form. More preferably, the composition is formulated in granules, powder or as effervescent tablets.

A solid composition for the treatment of plants has several advantages to traditional phytosanitary products, pesticides, etc. that are normally formulated as solutions comprising the active principle dissolved therein. First and foremost, a solid preparation drastically reduces the volume of the composition therefore drastically reducing transportation and stocking costs. Secondly, a solid preparation enables the presence of compounds that are not stable in water solution. This is the case, among others, of vitamin C. While vitamin C is stable in a solid formulation in the composition according to the present invention, said formulation in water would render stability issues regarding at least vitamin C, i.e., by oxidation.

Thus, the composition disclosed hereinabove may be preferably formulated in a soluble solid form and later on dissolved in water, preferably close to the application site.

The composition according to the disclosure may further comprise a binder. A binder is of special relevance when formulating the composition in a solid form. A binder according to the present disclosure may be selected from the group comprising maltodextrin, molasses, xanthan gum, starch and combinations thereof.

The present disclosure also relates to a method of protecting crops and seedlings against pathogenic organisms comprising the application of the compositions described hereinabove to said crops and seedlings by foliar spraying, trunk-injection, stem-injection or by means of injection to the roots. Foliar spraying is preferably carried out by means of terrestrial or aerial foliar spraying, while injection to the roots in a plant is preferably performed by means of an irrigation system or by underground injection.

The present disclosure also relates to a method of application of the composition described hereinabove together with one or more of fertilizers, pesticides, fungicides and other chemical compounds with biocidal activity against pathogenic organisms.

Furthermore, the present disclosure describes the use of the composition described hereinabove for the protection and/or treatment of crops and seedlings selected from the group of coffee, potato, vegetables, fruit trees, banana, citrus, ornamental and flower crops, extensive crops such as wheat, oat, rice, soy and corn and sugar canes against pathogenic organisms selected from the group of *Pyricularia oryzae, Phakopsora pachyrhizi, Phytophthora infestans, Phytophtora capsici, Septoria glycines, Cercospora kikuchii, Pseudoperonospora cubensis, Mycosphaerella fijiensis, Mycosphaerella musicola, Esclerotinia* and *Alternaria.* Preferably, the the crop is banana plant *Musa sp.* and/or the pathogenic organism is *Mycosphaerella fijiensis* or *Mycosphaerella musicola.*

The present disclosure also describes the use of the composition described hereinabove for the treatment of seeds.

### EXAMPLES

The following examples are included to illustrate the protective activity of the composition according to the present disclosure. Specifically, the composition was tested in the plantain disease known as Black Sigatoka, caused by the *Mycosphaerella fijiensis* fungus in banana tree.

### Example 1

To determine the comparative efficacy for the preventive control of Black Sigatoka in banana tree the following six preparations were tested during June-July 2022:

**Table 1. Composition comprising each of the treatments applied to banana trees.**

| Treatment | Composition (in 1 L) |
|---|---|
| 1 | Water (954 mL) + Hipotensor (2 mL) + SS1 (2,2 g) |
| 2 | Water (954 mL) + Hipotensor (2 mL) + SS3 (2,2 g) |
| 3 | Water (954 mL) + Hipotensor (2 mL) + SS5 (2,2 g) |
| 4 | Water (866 mL) + Hipotensor (2 mL) + Dithane Fmb 43 (132 mL) |
| 5 | Water (945 mL) + Bravonil 720 SC (55 mL) |
| 6 | Blank control |

SS1 in treatment 1 corresponds to a composition in a solid formulation comprising, as active ingredients, 40% karaya gum and 2% pectin with respect to the total amount of composition. The rest of the composition in SS1 comprises 9% glucose, 1% of dispersing agent, 2,5% humectant and 15,5% of carrier (potassium sulfate) with respect to the total amount of the composition.

SS3 in treatment 2 corresponds to a composition in a solid formulation comprising, as active ingredients, 30% karaya gum and 30% pectin with respect to the total amount of the composition. The rest of the composition in SS3 comprises 9% glucose, 1% of dispersing agent, 2,5% humectant and 15,5% of carrier (potassium sulfate) with respect to the total amount of the composition.

SS5 in treatment 3 corresponds to a composition in a solid formulation comprising, as active ingredients, 10% karaya gum and 40% pectin with respect to the total amount of the composition. The rest of the composition in SS5 comprises 9% glucose, 1% of dispersing agent, 2,5% humectant and 15,5% of carrier (potassium sulfate) with respect to the total amount of the composition.

The hipotensor described in treatments 1 to 4 corresponds to Hypotensor SYS^{®}, a solution of 100 g/L of polyoxyethylene lineal alcohol and 130 g/L of mono and dipotassium polydymethyl siloxane phosphates.

Dithane Fmb 43 corresponds to a liquid formulation comprising Mancozeb.

Bravonil 720 SC corresponds to a liquid formulation comprising Chlorothalonil.

Both Mancozeb and Chlorothalonil are the products currently used and marketed against Black Sigatoka, but they belong to the traditional pesticides. Moreover, Mancozeb use is forbidden in the European Union starting the year 2021.

### Example 2: Leave area with Sigatoka

Each treatment 1 to 6 was applied to 4 banana trees. Treatments 1 (SS1), 2 (SS3) and 3 (SS5) were applied at 50 g/ha. Treatment 4 (Dithane Fmb 43) was applied at 3 L/ha and Treatment 5 (Bravonil) was applied at 1,25 L/ha. The presence of Black Sigatoka was measured in leaves of said trees every 5 days for a total period of 15 days (4 measures).

In the following table the results of the presence of Black Sigatoka are shown. For each treatment is given a median value of the %area of the leaves covered by Black Sigatoka in each of the 4 banana trees submitted to each treatment.

**Table 2. Effect of treatments 1 to 6 in the presence of Black Sigatoka in leaves (in %area).**

| Treatment | 15-Jun-2022 | 20-Jun-2022 | 25-Jun-2022 | 30-Jun-2022 |
|---|---|---|---|---|
| 1 | 0 | 0 | 3,2 | 8,0 |
| 2 | 0 | 0 | 4,0 | 18,8 |
| 3 | 0 | 0 | 2,5 | 7,0 |
| 4 | 0 | 0 | 5 | 12,5 |
| 5 | 0 | 0 | 4,3 | 15,5 |
| 6 | 0 | 0,8 | 11,8 | 34,5 |

### Example 3: Leave area with necrotization

Apart from measuring the presence of Black Sigatoka in leaves, the area of necrotization in leaves was also measured in the 4 banana trees submitted to each of the treatments 1 to 6, every 5 days for a total period of 25 days (6 measures).

In the following table the results of the leave necrotization are shown. For each treatment is given a median value of the %area of necrotized leaves in each of the 4 banana trees submitted to each treatment.

**Table 3. Effect of treatments 1 to 6 in leave necrotization (in %area).**

| Treatment | 15-Jun-2022 | 20-Jun-2022 | 25-Jun-2022 | 30-Jun-2022 | 05-Jul-2022 | 10-Jul-2022 |
|---|---|---|---|---|---|---|
| 1 | 0 | 0 | 0 | 0 | 0 | 21,3 |
| 2 | 0 | 0 | 0 | 0 | 1,25 | 48,8 |
| 3 | 0 | 0 | 0 | 0 | 0 | 0 |
| 4 | 0 | 0 | 0 | 0 | 10 | 37,5 |
| 5 | 0 | 0 | 0 | 0 | 8,8 | 38,3 |
| 6 | 0 | 0 | 0 | 0 | 26,3 | 77,5 |

### Conclusions

The experiments 1 to 3 show that no symptoms of phytotoxicity were observed in commercial treatments (Mancozeb and Chlorothalonil).

Moreover, at 5 days after the application, symptoms of the disease are observed in the blank treatment.

Evaluating the data on June 30, 2022 (15 days after treatment) the area parameter with Black Sigatoka was analysed and Treatment 3 (SS5) reflected the best control trend and presented significant differences with Treatment 4 (Dithane) and Treatment 6 (blank) (ANOVA analysis performed). Treatment 1 yielded also better results than Treatments 2 and 4 to 6.

Evaluating the data on July 5, 2022 (20 days after treatment) the area parameter with Black Sigatoka was analysed and Treatment 3 (SS5) reflected the best control trend and presented significant differences with Treatment 4 (Dithane) and Treatment 6 (blank) (ANOVA analysis performed). Treatment 1 yielded also better results than Treatments 2 and 4 to 6.

Evaluating the data on July 5, 2022 (20 days after treatment) the area parameter with necrotization corresponding to the formation of perithecia or sexual phase of the disease shows no necrotization for plants under Treatments 1 and 3, while plants under Treatments 2 and 4 to 6 did show necrotization.

Evaluating the data on July 10, 2022 (25 days after treatment), the area parameter with necrotization corresponding to the formation of perithecia or sexual phase of the disease was analyzed and plants under Treatment 3 (SS5) did not show necrotization and showed significant differences with all Treatments 1, 2, 4 to 6 (ANOVA analysis performed).

## Claims

1. A composition for the protection of crops against pathogenic organisms comprising karaya gum and pectin, wherein the relative proportion by weight of karaya gum and pectin is between 1:1,3 and 1:12, respectively.

2. The composition according to claim 1, wherein karaya gum is present in an amount ranging between 5 and 15% by weight with respect to the total composition and pectin is present in an amount ranging between 20 and 60% by weight with respect to the total composition.

3. The composition according to claims 1 or 2, further comprising an acid selected from the group consisting of citric acid, malic acid, ascorbic acid, and tartaric acid.

4. The composition according to any one of claims 1 to 3, further comprising a plant extract selected from the groups plants consisting of Acerola (Malpighia emarginata), Kakadu (Terminalia Ferdinandiana), Camu-camu (Myrciaria dubia), Goji berries (Lycium barbarum o chinense), Musk rose (Rosa eglanteria), Rose hip extract, Baobab pulp.

5. The composition according to any one of claims 1 to 4, further comprising an additive selected from the group consisting of a lignin derivative, a natural essential oil and macronutrients and micronutrients.

6. The composition according to claim 5, wherein the lignin derivative is selected from the group consisting of sodium lignosulfonate, potassium lignosulfonate, Kraft lignin and combinations thereof; and/or the natural essential oil is selected from the group consisting of citronella essential oil, cinnamon oil, clove oil and combinations thereof; and/or the macronutrients and micronutrients are selected from the group consisting of urea, ammonium nitrate, phosphoric acid, potassium hydroxide, potassium nitrate, potassium sulfate, calcium nitrate, magnesium sulphate, iron sulphate, zinc sulphate, manganese sulphate, copper sulphate, ammonium molybdate, boric acid, silicic acid, sodium selenate and combinations thereof.

7. The composition according to any one of claims 1 to 6, further comprising a coadjuvant, wherein the coadjuvant comprises a preservative, preferably selected from the group consisting of 1,2- benzisothiazol-3(2H)-one, propionic acid, lactic acid, 1,2-Benzisothiazolin-3-one, (benciloxi)metanol, sorbic acid, sulphites, and combinations thereof and/or a surfactant, preferably selected from the group consisting of polyoxyethylene sorbitan monolaurate, polyoxyethylene polyoxypropylene sorbitan monolaurate, polyoxyethylene monobranched alcohol, amine ethoxylate, alkoxylated polyol ester, and combinations thereof.

8. The composition according to any one of claims 5 to 7, wherein the additives comprise macronutrients and micronutrients in an amount comprised between 3-20% by dry weight, and/or the preservative is in an amount comprised between 0,01-0,5% by dry weight and/or the surfactant is in an amount comprised between 1-5% by dry weight.

9. The composition according to any one of claims 1 to 8, wherein it is formulated in granules or powder or as effervescent tablets and/or it is dissolved in water.

10. The composition according to any one of claims 1 to 9, further comprising a filler such as glucose, and/or a dispersing agent preferably selected from the group consisting of ligonsulfonic acid salts, polyacrylates, polyarylphenol ethoxylate salts, alkylnaphtalenesulfonate derivatives and combinations thereof; and/or a humectant preferably selected from the group consisting of ethoxylated fatty alcohols, sorbitan monolaurate and combinations thereof; and/or a carrier preferably selected from the group consisting of polysaccharides such as maltodextrin, inorganic salts such as potassium sulfate and combinations thereof; and/or a binder preferably selected from the group comprising maltodextrin, molasses, xanthan gum, starch and combinations thereof.

11. A method of protecting crops and seedlings against pathogens comprising the application of any one of the compositions according to claims 1 to 10 to said crops and seedlings by foliar spraying, in particular by means of terrestrial or aerial foliar spraying, trunk-injection or by means of irrigation system or underground injection to the roots.

12. The method according to claim 11, wherein the compositions are applied together with one or more of pesticides, fertilizers and/or fungicides.

13. Use of the composition according to any one of claims 1 to 10 for the protection of crops and seedlings selected from the group of coffee, potato, vegetables, fruit trees, banana, citrus, ornamental and flower crops, extensive crops such as wheat, oat, rice, soy and corn and sugar canes against pathogenic organisms selected from the group of Pyricularia oryzae, Phakopsora pachyrhizi, Phytophthora infestans, Phytophtora capsici, Septoria glycines, Cercospora kikuchii, Pseudoperonospora cubensis, Mycosphaerella fijiensis, Mycosphaerella musicola, Esclerotinia and Alternaria.

14. Use of the composition according to claim 13, wherein the crop is banana plant Musa sp. and/or the pathogenic organism is Mycosphaerella fijiensis or Mycosphaerella musicola.

15. Use of the composition according to any one of claims 1 to 10 for the treatment of seeds.
